# EUROPEAN PATENT APPLICATION

(11) **EP 1 460 545 A2**
(43) Date of publication of application: **22.09.2004**
(21) Application number: 04006727.4
(22) Date of filing: 19.03.2004
(51) Int. Cl.: G06F 11/14, G11B 20/18

(54) **Method and apparatus for retrying reading or writing of data**

(30) Priority: 19.03.2003 KR 2003017063
(71) Applicant: Samsung Electronics Co., Ltd., Suwon-si, Gyeonggi-do (KR)
(72) Inventor: Namkoong, Yun, Suwon-si Gyeonggi-do (KR); Choi, Hoo-Joong, Yeongtong-gu Suwon-si Gyeonggi-do (KR); Jeong, Seung-youl, eup, Hwaseong-gun Gyeonggi-do (KR)
(74) Representative: Grünecker, Kinkeldey, Stockmair & Schwanhäusser Anwaltssozietät

(57) **Abstract**

Method and apparatus for retrying reading or writing of data within a limited processing time when the data is a predetermined type of data such as A/V (audio or visual) data. For error correction, any retry of reading or writing of data is performed within a remaining retrying limitation time period if the data is of the predetermined type of data. Thus, even if errors occur continuously, a command for reading or writing of data is executed within a limited time period for real-time data processing to preserve the quality of the predetermined type of data.

## Description

The present invention relates to audio and visual (AV) data processing such as in a computer, a personal video recorder (PVR), or a digital video recorder (DVR), and more particularly, to a method and apparatus for retrying reading or writing of data to correct for error.

Apparatuses for audio and video (AV) data processing, such as computers, PVRs, or DVRs, typically include a hard disc drive (HDD) to record AV data. A PVR is a digital recorder which records data on or reproduces data from a hard disc, unlike a conventional video cassette recorder (VCR) which stores a video signal on a magnetic tape. The PVR records a predetermined amount of AV data of a broadcast program without the need of a VCR using a hard disc drive embedded in a set top box or television main body. In other words, the PVR records AV data transmitted from a broadcasting station on the hard disc and reproduces the AV data in a similar manner as a computer reproduces files.

To this end, the PVR has a memory chip including an operating system (OS), reproduction software, a CPU, and a large-capacity hard disc. When a user selects a channel, the PVR automatically stores a broadcast signal of that channel on the hard disc as a digital signal and simultaneously reproduces the digital signal. Accordingly, when the user presses a stop button and then presses a play button, the PVR reproduces the stored broadcast signal. In addition, the PVR enables a broadcast program to be reviewed or reproduced in slow motion or to skip a tedious portion of the program such that a desired portion can be conveniently found or edited.

A DVR is a device which converts AV data input by an analog supervisory camera into a digital signal on an image capture board and stores the converted digital signal having high image quality on a hard disc. The DVR is for example applied in surveillance equipment that can replace an existing analog closed circuit television (CCTV) for effective crime prevention and security maintenance. The DVR instantaneously searches for stored AV data, splits images taken by several cameras, and reproduces the images on one monitor. The DVR is also used to remotely monitor and record images in real-time using a modem or local area network (LAN).

In a computer, a PVR, or a DVR, for AV data processing, real-time processing of AV data is desired for high quality AV data. When a command for reading AV data or a command for writing AV data is executed, an error may occur. In order to correct for such an error, reading or writing of AV data is repeatedly retried up to a predetermined maximum number of times in the prior art.

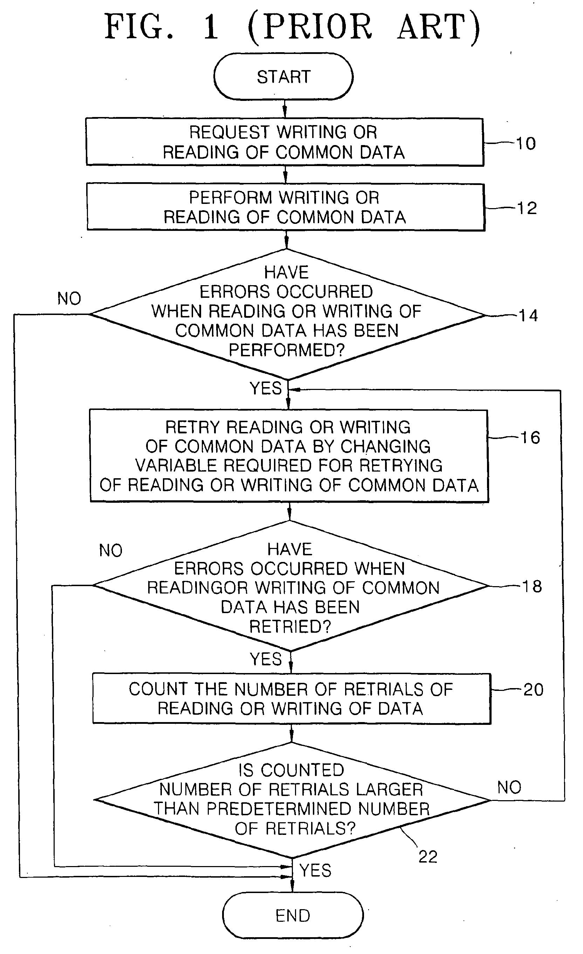

FIG. 1 shows a flowchart for a prior art method of correcting for an error during reading or writing of data. The prior art method performed by a computer, a PVR, or a DVR includes executing a command for reading or writing data. Then, if an error occurs during reading or writing data, retrying of reading or writing of data is performed by changing a variable used for reading or writing data. In addition, the number of retries of reading or writing data is counted and compared to a predetermined maximum number.

First, in step 10, reading or writing of common data containing video data and/or audio data is requested. In step 12, reading or writing of common data is performed. In step 14, whether an error has occurred during the reading or writing of common data is determined. In step 16, if an error has occurred, reading or writing of common data is retried by changing a variable used for reading or writing of data.

In step 18, whether an error has occurred during retrying of the reading or writing of data is determined. In step 20, if an error has occurred during such a retry, the total number of retries of reading or writing data is counted. In step 22, the counted number of retries is compared to a predetermined maximum number which is preset information. If the counted number of retries is larger than the predetermined maximum number, the flowchart of Fig. 1 ends with unsuccessful reading or writing of data. On the other hand, if the counted number of retries is not larger than the predetermined maximum number, the flowchart of Fig. 1 loops back to step 16 for another retry.

As described previously, the prior art method of retrying reading or writing of data is dictated by the permitted predetermined maximum number of retries. In a computer, a PVR, or a DVR, real-time data processing is desired for high quality AV data. However, if an error occurs when reading or writing of AV data, retrying of reading or writing data may be performed up to the predetermined maximum number of retries. As such, data processing may be delayed up to the predetermined maximum number of retries, and AV data may deteriorate from such delay resulting in lower quality of image and/or sound quality.

In addition, the process of reading or writing of AV data is typically subdivided. With the prior art method of error correction, the time required for each sub-divided reading or writing of AV data varies since the number of retries for error correction varies up to the predetermined maximum number. Thus in the prior art, because real-time data processing is un-predictably delayed, the image and/or sound quality may be un-predictably deteriorated.

It is the object of the present invention to limit the processing time for retrying reading or writing of data for error correction when the data is a predetermined type of data such as A/V (audio or visual) data for example.

This object is solved by the subject matter of the independent claims.

Preferred embodiments are defined in the dependent claims.

According to an aspect of the present invention, there is provided a method and an apparatus for reading or writing of data, it is first determined whether the data is of a predetermined type of data, such as A/V data for example. For error correction, retrying of reading or writing of data is performed within a retrying limitation time if the data is of the predetermined type of data. On the other hand, if the data is not of the predetermined type of data, the number of retries of reading or writing of the data for error correction is limited to be not larger than a predetermined maximum number.

In one embodiment of the present invention, a required time period for performing a retrying type of reading or writing of the data is determined. The retrying of reading or writing of the data is terminated if the required time period is greater than a remaining retrying limitation time.

In another embodiment of the present invention, a timing unit starts to time down from the retrying limitation time after a request for reading or writing of data is generated. In a further embodiment of the present invention, the retrying type of reading or writing and the required time period for the retrying type are determined from a sequential order of retrying types as stored within a lookup table.

In this manner, if an error occurs during reading or writing of the predetermined type of data such as audio data and/or video data, retrying for error correction is time-limited. Thus, even if errors occur continuously, a command for reading or writing of data is executed within a limited time period.

Deterioration of data quality may result from prolonged execution time for retrying reading or writing of data. As a result, because the present invention limits the execution time for such retrying, deterioration of data quality is minimized. Consequently, the present invention may advantageously be applied for processing of the predetermined type of data in a variety of error-inducing conditions. For example, the present invention may advantageously be applied for error correction during reading or writing of audio data and/or video data within a hard disc drive.

The above and other features and advantages of the present invention will become more apparent by describing in detail exemplary embodiments thereof with reference to the attached drawings in which:
FIG. 1 is a flowchart illustrating a conventional method of retrying a reading or writing of data;
FIG. 2 is a flowchart illustrating a method of retrying reading or writing of data according to an embodiment of the present invention;
FIG. 3 is a flowchart illustrating sub-steps of step 40 of FIG. 2, according to an embodiment of the present invention;
FIG. 4 is a flowchart illustrating sub-steps of step 42 of FIG. 2, according to an embodiment of the present invention;
FIG. 5 is a block diagram of an apparatus for retrying the reading or writing of data, according to an embodiment of the present invention;
FIG. 6 illustrates transmission of signals between elements of FIG. 5 according to the flowchart of FIG. 2, in an embodiment of the present invention;
FIG. 7 illustrates transmission of signals between elements of FIG. 5 according to the flowchart of FIG. 2, in another embodiment of the present invention;
FIG. 8 is a block diagram of a first retrying instruction unit of FIG. 5, according to an embodiment of the present invention;
FIG. 9 illustrates transmission of signals between elements of FIG. 8 according to the flowchart of FIG. 3, in an embodiment of the present invention;
FIG. 10 is a block diagram of a second retrying instruction unit of FIG. 5, according to an embodiment of the present invention;
FIG. 11 illustrates transmission of signals between elements of FIG. 10 according to the flowchart of FIG. 4, in an embodiment of the present invention; and
FIG. 12 illustrates transmission of signals between elements of FIG. 10 according to the flowchart of FIG. 4, in another embodiment of the present invention.

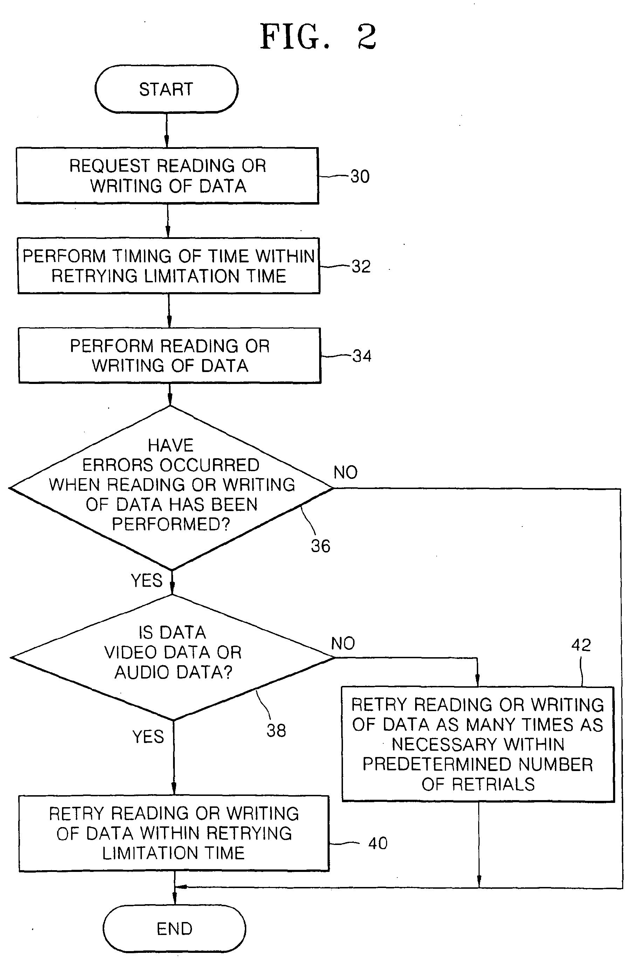

FIG. 2 is a flowchart illustrating a method of retrying a reading or writing of data according to an embodiment of the present invention. Such a method includes retrying the reading or writing of data within a predetermined retrying time or retrying the reading or writing of data within a predetermined maximum number of times depending on whether the data is or is not video data and/or audio data (steps 30 through 42).

First, in step 30, writing of data on a recording medium or reading of data from the recording medium is requested. Here, the recording medium is a device for storing data that is a hard disc drive in an example embodiment of the present invention. 'Writing' means recording data on the recording medium so as to store the data. 'Reading' means retrieving the data recorded on the recording medium.

In step 32, a timing unit, such as a timer for example begins to time down from a retrying limitation time, in one embodiment of the present invention. In an alternative embodiment of the present invention, the timer times up from 'zero' to the retrying limitation time.

In an example embodiment of the present invention, the retrying limitation time is determined by comparing the size of data remaining in a buffer of the entire system with the rate of data used per hour and calculating a comparison result in a host. In any case, the retrying limitation time is determined from a maximum limit of undesired delay in correcting for error during reading or writing of audio data and/or video data.

In step 34, reading or writing of data is initially performed upon the request for reading or writing of data in step 30. In step 36, it is determined whether an error occurred during reading or writing of data in step 34. If such an error has not occurred, the flowchart of Fig. 2 ends with successful reading or writing of data. On the other hand, if such an error has occurred, it is determined whether the read or written data is audio data and/or video data in step 38.

If such data is video data and/or audio data, reading or writing of data is retried within the retrying limitation time in step 40. After step 40, the read or written data is transmitted to a predetermined element for reproduction or storage of data, and the flowchart of Fig. 2 ends.

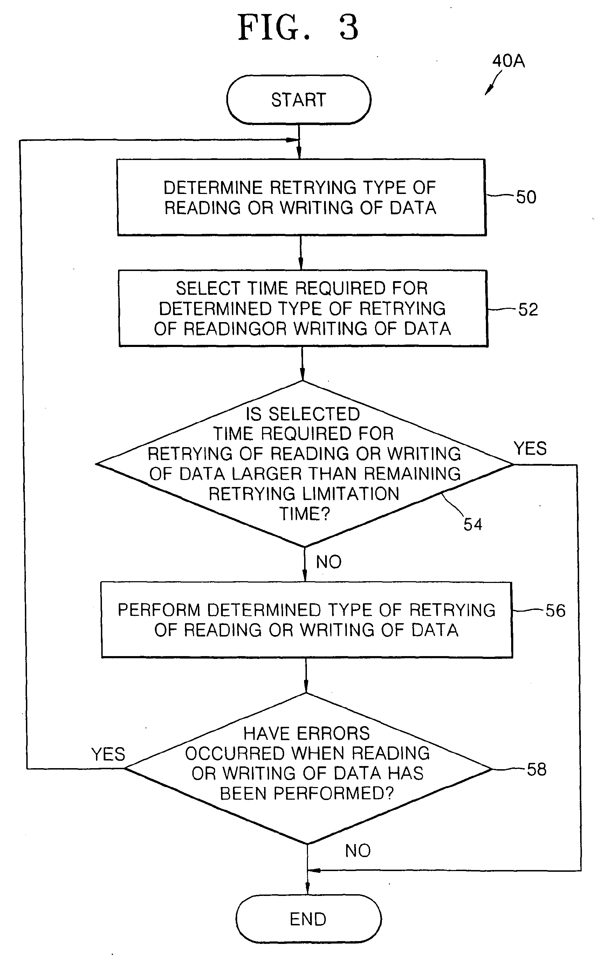

FIG. 3 is a flowchart showing sub-steps of the step 40 of FIG. 2, according to an embodiment 40A of the present invention. The embodiment 40A includes comparing a time required for retrying of a predetermined type of reading or writing of data with the remaining retrying limitation time, performing the predetermined type of reading or writing of data, and checking whether an error has occurred in the read or written data (steps 50 through 58).

First, in step 50, a retrying type of reading or writing for error correction is determined. The term "retrying type of reading or writing" refers to a unique type of condition(s) to be set for the current retry. For example, for retrying a reading of data, the type of condition(s) set for the current retry may include 'changing a variable' value or 'applying a current'. Alternatively, for retrying a writing of data, the type of condition(s) set for the current retry may include 'an initial setting state' or 'movement to a parking region'.

The "retrying type" (i.e., the unique condition(s) to be set for a current retry) is determined according to a sequential order that is optimized for correcting errors during reading or writing of data, as known to one of ordinary skill in the art of hard disc drives. Examples of such a sequential order for each of reading data or writing data are listed in the following Table 1:

**Table 1**

| | Order | Retrying Type | Time required for retrying |
|---|---|---|---|
| Read | 1 | Changing a variable | 5 ms |
| | 2 | Applying a current | 10 ms |
| Write | 1 | Initial setting state | 15 ms |
| | 2 | Movement to parking region | 10 ms |
| | 3 | Changing a variable | 5 ms |

This Table 1 illustrates the retrying types in the sequential order of first performing a retry with "changing a variable" and then if necessary subsequently performing another retry with "applying a current," for error correction during reading of data. Similarly for error correction during writing of data, the retrying types in the sequential order of Table 1 are first performing a retry with the "initial setting state", and then if necessary subsequently performing another retry with "movement to parking region", and then if further necessary subsequently performing another retry with "changing a variable."

In step 52 of Fig. 3, a time required for the current retrying type of reading or writing is determined according to the lookup Table 1 above. Table 1 lists a corresponding time required for each retrying type of reading or writing. For example, assume that the current retrying type is for the first order of 'changing a variable' for correcting an error during reading of data. In that case, Table 1 indicates that a time period of 5 ms is required for that current retrying type. As an alternative example, assume that the current retrying type is for the first order of 'initial setting state' for correcting an error during writing of data. In that case, Table 1 indicates that a time period of 15 ms is required for that current retrying type.

In step 54 of Fig. 3, the time required for retrying of reading or writing of data as determined from the lookup Table 1 is compared to the remaining retrying limitation time. If the time required for retrying of reading or writing is larger than the remaining retrying limitation time, the flowchart of Fig. 3 ends, and error correction is terminated. Referring to Figs. 2 and 3, a timing unit started to time down from the retrying limitation time in step 32 of Fig. 2. The remaining retrying limitation time is the time indicated as remaining at such a timing unit.

For example, assume that a command for reading data is executed, that the remaining retrying limitation time is 20 ms, and that the time period required for the current retrying type of reading is 30 ms. In that case, the time required for the current retrying type is larger than the remaining retrying limitation time, and thus, the flowchart of Fig. 3 ends after step 54.

On the other hand, if the time period required for the retrying type of reading is not larger than the remaining retrying limitation time, the retrying of reading of data is performed with that retrying type in step 56. For example, assume that a command for reading data is executed, that the remaining retrying limitation time is 40 ms, and that the time period required for the current retrying type of reading is 30 ms. In that case, the time required for the current retrying type is not larger than the remaining retrying limitation time, and thus, retrying of the reading of data for that retrying type is performed at step 56.

In step 58, it is determined again whether an error has occurred during retrying of reading or writing of data in step 56. If an error has not occurred, the flowchart of Fig. 3 ends with successful reading or writing of data. If an error has occurred in step 56, the flowchart of Fig. 3 loops back to step 50 to perform another retry with a subsequent retrying type in the sequential order of retrying types as illustrated in Table 1 above for example. In this manner, steps 50, 52, 54, 56, and 58 of Fig. 3 are repeated until either the reading or writing of data is retried without an error occurring at steps 56 and 58 or until the time required for a retrying type becomes larger than the remaining retrying limitation time that is constantly being timed down.

Referring back to step 38 of FIG. 2, if the read or written data is determined to be not audio data and/or video data, reading or writing of data is retried as many times as necessary within a predetermined maximum number of retries in step 42. In other words, if reading or writing of data other than AV data is requested, retrying of reading or writing of data is performed as many times as necessary within the predetermined maximum number of retries regardless of the remaining retrying limitation time.

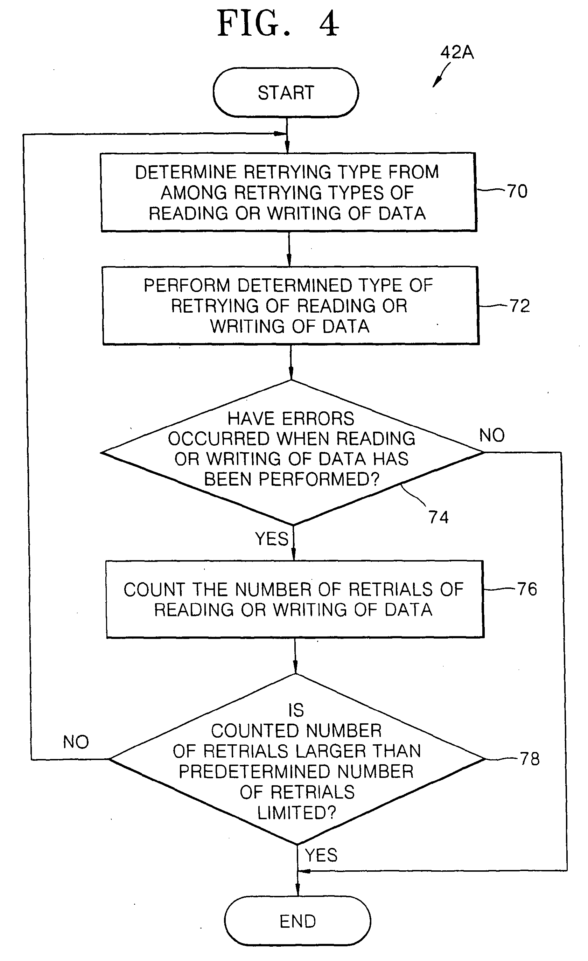

FIG. 4 is a flowchart of sub-steps of step 42 of FIG. 2, according to an embodiment 42A of the present invention. The embodiment 42A includes retrying through a sequential order of retrying types of reading or writing of data as many times as necessary within the predetermined maximum number of retries (steps 70 through 78).

First, in step 70, a current retrying type is determined from the sequential order of retrying types as illustrated and described in reference to Table 1 above. In step 72, a retry of reading or writing of data is performed for the current retrying type. In step 74, it is determined whether an error has occurred during the retry of step 72. If an error has not occurred, the flowchart of Fig. 4 ends with successful reading or writing of data.

On the other hand, if an error has occurred, the total number of retries of reading or writing of data is counted in step 76. A counter may be used for incrementing by one each time retry step 72 is performed.

In step 78, the counted number of retries is compared to the predetermined maximum number of retries. If the counted number of retries is larger than the predetermined maximum number of retries, the flowchart of Fig. 4 ends with unsuccessful reading or writing of data.

On the other hand, if the counted number of retries is not larger than the predetermined maximum number of retries, the flowchart of Fig. 4 loops back to step 70. In this manner, steps 70, 72, 74, 76, and 78 of Fig. 4 are repeated until the data is read or written successfully or until the counted number of retries exceeds the predetermined maximum number of retries such that the reading or writing of data is terminated as being unsuccessful.

For example, when the predetermined maximum number of retries is limited to 100 and the counted number of retries is currently 88, retrying of reading or writing of data can be performed 12 more times. Typically, each pass-through of steps 70, 72, 74, 76, and 78 is performed with a corresponding retrying type according to an optimized sequential order of retrying types as illustrated for example in Table 1 above.

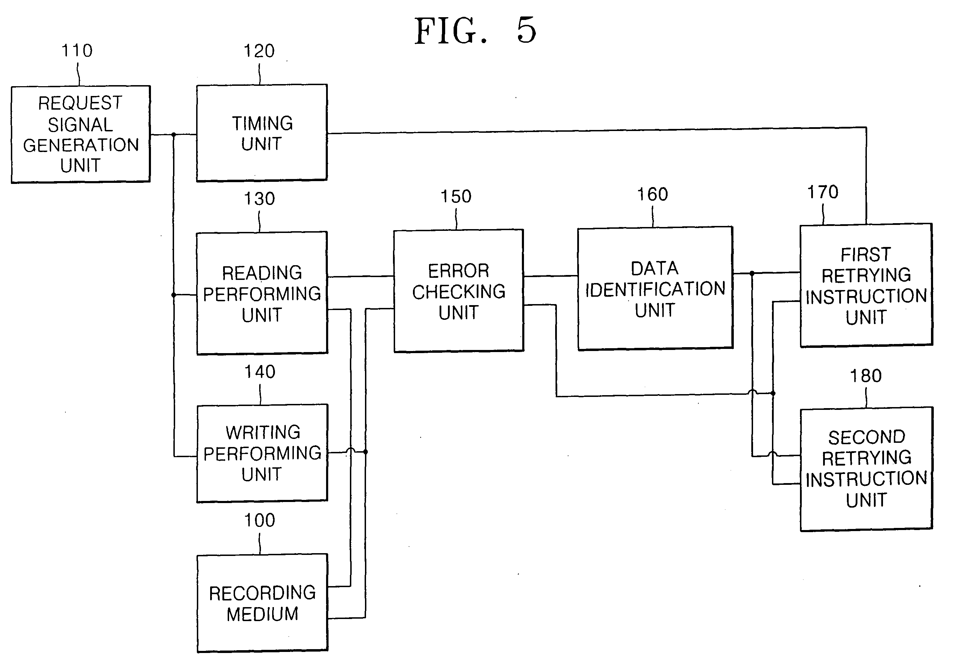

An apparatus for retrying reading or writing of data according to an embodiment of the present invention is now described. FIG. 5 is a block diagram of an apparatus for retrying the reading or writing of data according to an embodiment of the present invention. Referring to FIG. 5, such an apparatus includes a recording medium 100, a request signal generation unit 110, a timing unit 120, a reading performing unit 130, a writing performing unit 140, an error checking unit 150, a data identification unit 160, a first retrying instruction unit 170, and a second retrying instruction unit 180.

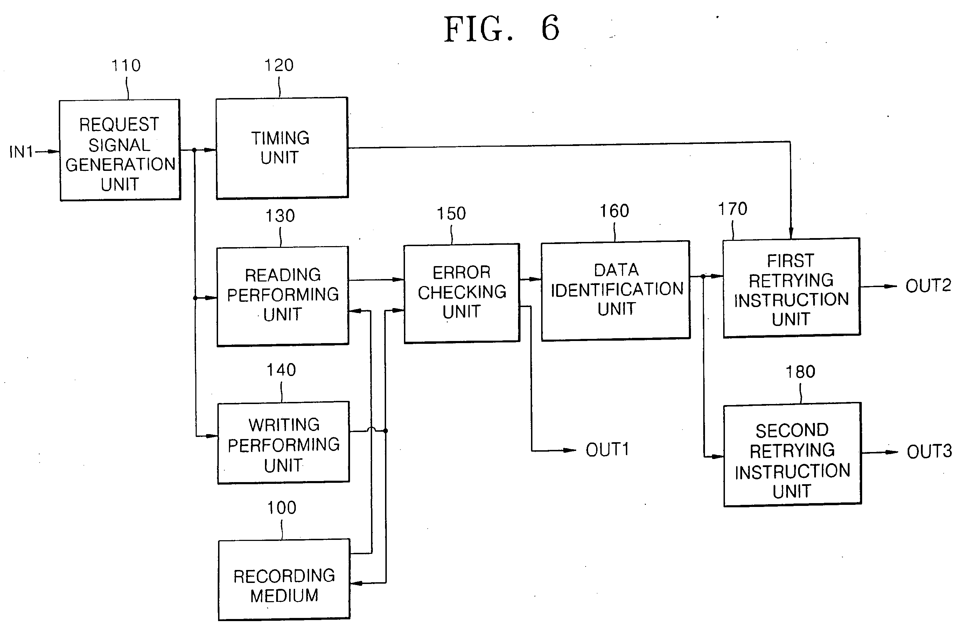

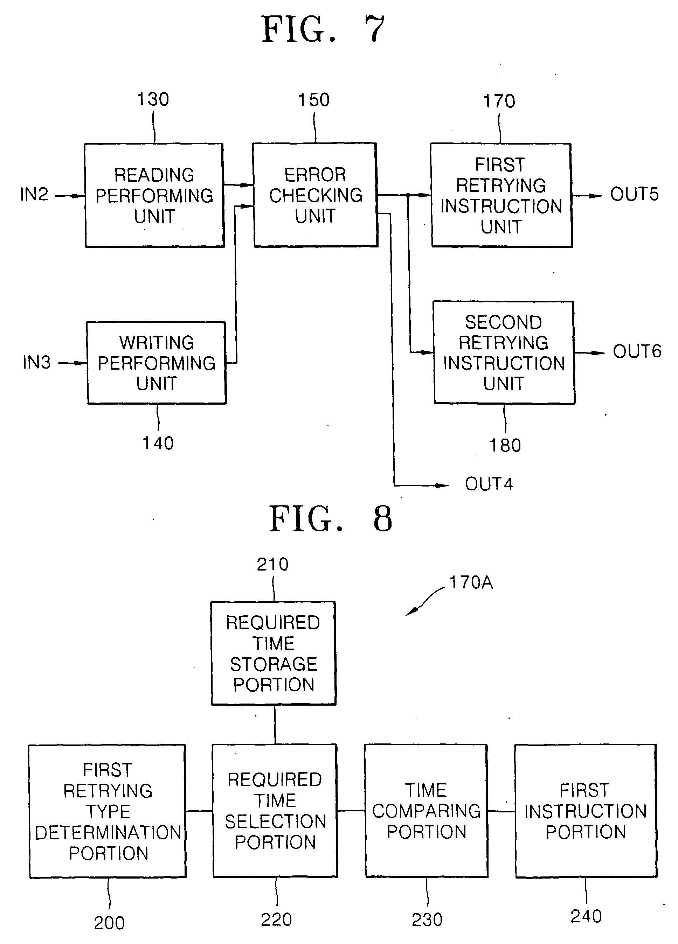

FIGS. 6 and 7 illustrate transmission of signals between the elements of FIG. 5, according to the flowchart of FIG. 2. The recording medium 100 is an element for storing data. Stored data includes AV data as well as common data that is not AV data. In particular, the recording medium 100 is part of a computer, a PVR, or a DVR, for AV data processing, and the recording medium 100 is a hard disc drive, in one example embodiment of the present invention.

Referring to Figs. 2, 5, 6 and 7, the request signal generation unit 110 indicates a request for writing of data on the recording medium 100 or a request for reading of data recorded on the recording medium 100 by outputting a request signal (step 30 of Fig. 2). In FIG. 6, upon receiving a user's request for writing of data via an input terminal IN1, the request signal generation unit 110 outputs the request signal to the timing unit 120 and the writing performing unit 140. Alternatively, upon receiving a user's request for reading of data via the input terminal IN1, the request signal generation unit 110 outputs the request signal to the timing unit 120 and the reading performing unit 130.

Upon receiving such a request signal, the timing unit 120 which is a timer begins to time down from the retrying limitation time (step 32 of Fig. 2). The reading performing unit 130 performs reading of data recorded on the recording medium 100 and outputs a reading signal to the error checking unit 150 (step 34 of Fig. 2).

As shown in FIG. 6, the reading performing unit 130 performs such functions in response to the request signal from the request signal generation unit 110. Alternatively, as shown in FIG. 7, the reading performing unit 130 performs such functions in response to a first instruction signal input via an input terminal IN2 from the first retrying instruction unit 170 or in response to a second instruction signal input through the input terminal IN2 from the second retrying instruction unit 180.

Similarly, the writing performing unit 140 performs writing of data on the recording medium 100 and outputs a writing signal to the recording medium 100 and the error checking unit 150 (step 34 of Fig. 2). As shown in FIG. 6, the writing performing unit 140 performs such functions in response to the request signal from the request signal generation unit 110. Alternatively, as shown in FIG. 7, the writing performing unit 140 performs such functions in response to the first instruction signal input via an input terminal IN3 from the first retrying instruction unit 170 or in response to the second instruction signal input via the input terminal IN3 from the second retrying instruction unit 180.

The error checking unit 150 determines whether an error has occurred during reading or writing of data and outputs a checking signal (step 36 of Fig. 2). The error checking unit 150 determines whether an error has occurred during reading of data from the reading signal generated by the reading performing unit 130. Alternatively, the error checking unit 150 determines whether an error has occurred during writing of data from the writing signal generated by the writing performing unit 140.

The error checking unit 150 includes a retrying sensing unit (not shown), which senses whether reading or writing of data has been retried one or more times. When the retrying sensing unit senses that reading or writing of data has not been retried one time yet, the retrying sensing unit outputs a sensing signal indicating such a condition to the data identification unit 160. When the retrying sensing unit senses that reading or writing of data has been retried one or more times, the retrying sensing unit outputs the sensing signal indicating such a condition to the first retrying instruction unit 170 or the second retrying instruction unit 180.

As shown in FIG. 6, the error checking unit 150 outputs the checking signal via an output terminal OUT1 to indicate that an error has not occurred during reading or writing of data. Alternatively, the error checking unit 150 outputs the checking signal indicating that an error has occurred during reading or writing of data to the data identification unit 160 when the sensing signal from the retrying sensing unit indicates that a retry has not been performed one time yet.

Fig. 7 shows alternative signal paths when the sensing signal from the retrying sensing unit indicates that at least one retry has been performed. In FIG. 7, the error checking unit 150 outputs the checking signal via an output terminal OUT4 to indicate that an error has not occurred during a current reading or writing of data. Alternatively, the error checking unit 150 outputs the checking signal indicating that an error has occurred to the first retrying instruction unit 170 or the second retrying instruction unit 180 when the sensing signal from the retrying sensing unit indicates that at least one retry has been performed.

In this manner, the checking signal output through either of the output terminals OUT1 and OUT4 acts as a control signal used to stop performance of reading or writing of data upon successful completion without an error.

The data identification unit 160 determines and outputs an identification signal indicating whether data is audio data and/or video data (step 38 of Fig. 2). As shown in FIG. 6, the data identification unit 160 outputs the identification signal to the first retrying instruction unit 170 or the second retrying instruction unit 180 in response to the checking signal generated by the error checking unit 150.

The first retrying instruction unit 170 instructs retrying of reading or writing of data within the remaining retrying limitation time when the data is audio data and/or video data (step 40 of Fig. 2). As shown in FIG. 6, the first retrying instruction unit 170 receives the identification signal from the data identification unit 160, instructs retrying of reading or writing of data within the remaining retrying limitation time input from the timing unit 120, and outputs a first instruction signal through an output terminal OUT2 to the reading performing unit 130 or the writing performing unit 140. Alternatively, as shown in FIG. 7, the first retrying instruction unit 170 receives the checking signal from the error checking unit 150, instructs retrying of reading or writing of data within the remaining retrying limitation time input from the timing unit 120, and outputs the first instruction signal through an output terminal OUT5 to the reading performing unit 130 or the writing performing unit 140.

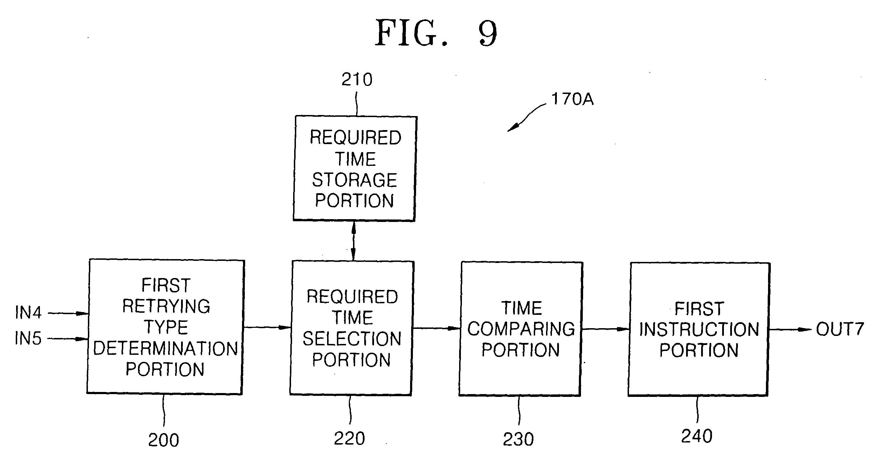

FIG. 8 is a block diagram of the first retrying instruction unit 170 of FIG. 5, according to an embodiment 170A of the present invention. Referring to FIG. 8, the first retrying instruction unit 170A includes a first retrying type determination portion 200, a required time storage portion 210, a required time selection portion 220, a time comparing portion 230, and a first instruction portion 240. FIG. 9 illustrates transmission of signals between the elements of FIG. 8 according to the flowchart of FIG. 3.

The first retrying type determination portion 200 determines and outputs a determination signal indicating the retrying type for the current retry of reading or writing of data (step 50 of Fig. 3). As shown in FIG. 9, the first retrying type determination portion 200 outputs the determination signal to the required time selection portion 220 in response to the identification signal input via an input terminal IN4 from the data identification unit 160 or the checking signal input via an input terminal IN5 from the error checking unit 150, when either of such signals indicates that a retry is to be performed.

The required time storage portion 210 of Fig. 9 stores times required for the retrying types of reading or writing of data typically in the form of a lookup table, such as Table 1 described above. The required time selection portion 220 determines and outputs the selected time period required for the current retrying type to the time comparing portion 230 (step 52 of Fig. 3). The selected time period is determined using the lookup table stored within the required time storage portion 210 from the retrying type indicated by the determination signal as generated by the first retrying type determination portion 200.

The time comparing portion 230 generates a comparison signal by comparing the time period required for retrying of reading or writing of data with the remaining retrying limitation time as indicated by the timing unit 120 (step 54 of Fig. 3). The input terminal IN6 receives the remaining limitation time as indicated from the timing unit 120.

The first instruction portion 240 instructs retrying with the determined retrying type of reading or writing of data. As shown in FIG. 9, the first instruction portion 240 outputs a first instruction signal via an output terminal OUT7 to the reading performing unit 130 or the writing performing unit 140 in response to the time comparison signal from the time comparing portion 230. The first instruction signal indicates that the reading performing unit 130 or the writing performing unit 140 is to perform the current retry of reading or writing of data when the time comparison signal indicates that the time period required for retrying of reading or writing of data is less than the remaining retrying limitation time (step 56 of Fig. 3). Step 58 of Fig. 3 is then performed by the error checking unit 150 of Fig. 5 after the retry step 56.

Referring to Figs. 2 and 6, the second retrying instruction unit 180 instructs retrying of reading or writing of data as many times as necessary within the predetermined maximum number of retries when the data is not audio and/or video data (step 42 of Fig. 2). As shown in FIG. 6, the second retrying instruction unit 180 receives the identification signal from the data identification unit 160, instructs retrying of reading or writing of data as many times as necessary within the predetermined number of retries, and outputs a second instruction signal through an output terminal OUT3 to the reading performing unit 130 or the writing performing unit 140.

Alternatively, as shown in FIG. 7, the second retrying instruction unit 180 receives the checking signal from the error checking unit 150 and instructs retrying of reading or writing of data as many times as necessary within the predetermined maximum number of retries. In addition, the second retrying instruction unit 180 outputs the second instruction signal through an output terminal OUT6 to the reading performing unit 130 or the writing performing unit 140.

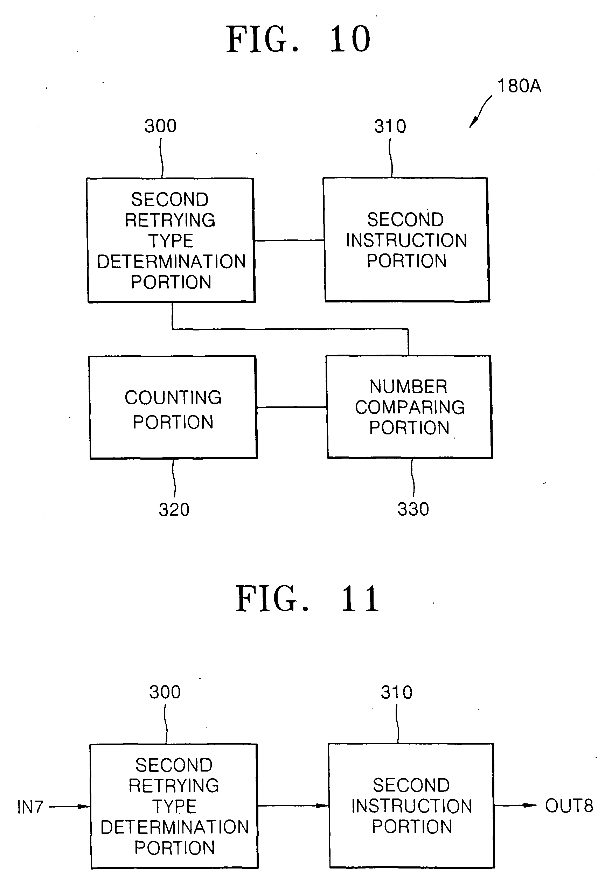

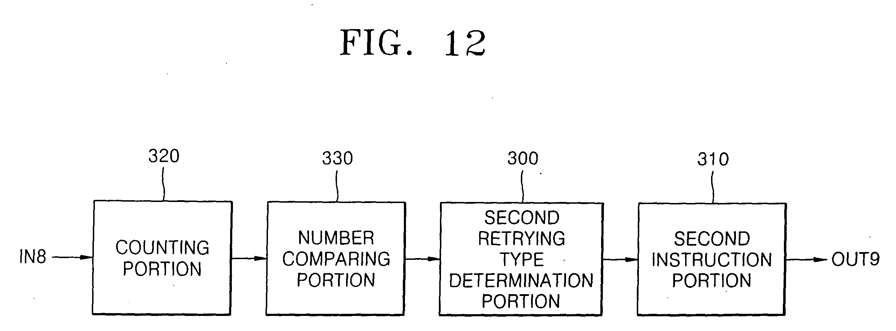

FIG. 10 is a block diagram of the second retrying instruction unit 180 of FIG. 5, according to an embodiment 180A of the present invention. Referring to FIG. 10, the second retrying instruction unit 180A includes a second retrying type determination portion 300, a second instruction portion 310, a counting portion 320, and a number comparing portion 330. FIGS. 11 and 12 illustrate transmission of signals between the elements of FIG. 10 according to the flowchart of FIG. 4.

The second retrying type determination portion 300 determines and outputs a determination signal indicating the retrying type for the current retry to be performed to the second instruction portion 310 (step 70 of Fig. 4) when the identification signal input via an input terminal IN7 from the data identification unit 160 indicates that the data is not audio and/or video data. The current retry of the determined retrying type is performed when the second instruction portion 310 generates a second instruction signal through an output terminal OUT8 to the reading performing unit 130 or the writing performing unit 140 (step 72 of Fig. 4). The error checking unit 150 then check for any errors occurring during such a retry (step 74 of Fig. 4). If an error has not occurred, the flowchart of Fig. 4 ends with successful reading or writing of data.

On the other hand, as shown in FIG. 12, if an error has occurred during the retry, the second retrying type determination portion 300 determines and outputs the determination signal to the second instruction portion 310 in response to a number comparison signal input from the number comparison portion 330. The counting portion 320 counts a total number of retries (step 76 of Fig. 4) for the current command for reading or writing of data and outputs a counting signal to the number comparing portion 330, when the checking signal input via an input terminal IN8 from the error checking unit 150 indicates that an error has occurred during the last retry.

The number comparing portion 330 compares the counted total number of retries with a predetermined maximum number of retries (step 78 of Fig. 4) to output a comparison signal to the second retrying type determination portion 300. The second retrying type determination portion 300 determines the retrying type for another retry to be performed if the counted total number of retries is not larger than the predetermined maximum number of retries (looping back to step 70 after step 78 in Fig. 4). Alternatively, the flowchart of Fig. 4 ends after step 78 in Fig. 4 if the counted total number of retries is larger than the predetermined maximum number of retries.

The elements of the block diagrams of Figs. 5, 6, 7, 8, 9, 10, 11, and 12 may individually be implemented with various electronic elements as known to one of ordinary skill in the art. For example, the timing unit 120 may be implemented with a conventional timer that times down from a predetermined time period. In addition, the required time storage portion 210 may be implemented with any type of data storage device as known to one of ordinary skill in the art. The other components 110, 130, 140, 150, 160, 170, 180, 200, 220, 230, 240, 300, 310, 320, and 330 may each individually be implemented with any type of data processing device or programmable logic device as known to one of ordinary skill in the art.

In this manner, if an error occurs during reading or writing of audio data and/or video data, retrying for error correction is time-limited. Thus, even if errors occur continuously, a command for reading or writing of data is executed within a limited time period. Deterioration of image and/or sound quality may result from prolonged execution time for retrying reading or writing of data. As a result, because the present invention limits the execution time for such retrying reading or writing of audio and/or video data, deterioration of image and/or sound quality is minimized. Consequently, the present invention may advantageously be applied for processing of audio data and/or video data in a variety of error-inducing conditions.

The foregoing is by way of example only and is not intended to be limiting. For example, the present invention has been described herein for performing retries for error correction when reading or writing data within a hard disc drive. However, the present invention may be applied for any other types of data storage devices. In addition, the present invention is described herein for performing time-limited retries for error correction when reading or writing audio data and/or video data. However, the present invention may be applied for minimizing data deterioration when processing other predetermined types of data. Thus, it should be understood by those of ordinary skill in the art that various changes in form and details may be made without departing from the scope of the present invention as defined by the following claims.

## Claims

1. A method of retrying reading or writing of data, comprising:
A. determining a required time period for performing a retrying type of reading or writing of the data; and
B. terminating retrying of reading or writing of the data if the required time period is greater than a remaining retrying limitation time.

2. The method of claim 1, further comprising:
starting to time down from the retrying limitation time after a request for reading or writing of the data is generated.

3. The method of claim 1 or 2, further comprising:
determining whether an error has occurred during an initial reading or writing of the data or during a prior retry of reading or writing of the data; and
performing steps A and B if said error has occurred.

4. The method of one of claims 1 to 3, further comprising:
determining whether the data is a predetermined type of data; and
performing steps A and B only if the data is the predetermined type of data.

5. The method of claim 4, wherein the predetermined type of data is audio or video data.

6. The method of claim 4 or 5, further comprising the following steps when the data is not the predetermined type of data:
determining a total count of retries for the reading or writing of the data;
performing another retry if the total count of retries is not greater than a predetermined maximum number of retries; and
terminating retrying of reading or writing of data if the total count of retries is greater than the predetermined maximum number of retries.

7. The method of one of claims 1 to 6, further comprising:
determining the retrying type of reading or writing from a sequential order of retrying types as stored within a lookup table; and
determining the required time period for the retrying type from the lookup table.

8. The method of one of claims 1 to 7, further comprising:
performing a retry of reading or writing the data for the retrying type if the required time period is not greater than the remaining retrying limitation time.

9. The method of claim 1, wherein the data is read or written within a hard disc drive.

10. A method of reading or writing of data, comprising:
determining whether the data is a predetermined type of data; and
performing any retry of reading or writing of the data within a remaining retrying limitation time if the data is of the predetermined type of data.

11. The method of claim 10, further comprising:
performing a number of retries of reading or writing of the data that is not larger than a predetermined maximum number if the data is not of the predetermined type of data.

12. An apparatus for retrying reading or writing of data, comprising:
a required time selection portion for determining a required time period for performing a retrying type of reading or writing of the data; and
means for terminating retrying of reading or writing of the data if the required time period is greater than a remaining retrying limitation time.

13. The apparatus of claim 12, further comprising:
a timing unit for starting to time down from the retrying limitation time after a request for reading or writing of the data is generated.

14. The apparatus of claim 12 or 13, further comprising:
means for determining whether an error has occurred during an initial reading or writing of the data or during a prior retry of reading or writing of the data; and
means for performing any retry of reading or writing of the data when said error has occurred.

15. The apparatus of one of claims 12 to 14, further comprising:
a data identification unit for determining whether the data is a predetermined type of data; and
means for terminating retrying of reading or writing of the data if the required time period is greater than the remaining retrying limitation time only if the data is the predetermined type of data.

16. The apparatus of claim 15, wherein the predetermined type of data is audio or video data.

17. The apparatus of claim 15 or 16, further comprising:
a counting portion for determining a total count of retries of reading or writing of the data;
means for performing another retry if the total count of retries is not greater than a predetermined maximum number of retries when the data is not the predetermined type of data; and
means for terminating retrying of reading or writing of data if the total count of retries is greater than the predetermined maximum number of retries when the data is not the predetermined type of data.

18. The apparatus of one of claims 12 to 17, further comprising:
a storage portion for storing a lookup table having a sequential order of retrying types used for determining the retrying type and the required time period for the retrying type.

19. The apparatus of one of claims 12 to 18, further comprising:
means for performing a retry of reading or writing the data for the retrying type if the required time period is not greater than the remaining retrying limitation time.

20. The apparatus of one of claims 12 to 19, wherein the data is read or written within a hard disc drive.

21. An apparatus for reading or writing of data, comprising:
a data identification unit for determining whether the data is a predetermined type of data; and
means for performing any retry of reading or writing of data within a remaining retrying limitation time if the data is of the predetermined type of data.

22. The apparatus of claim 21, further comprising:
means for performing a number of retries of reading or writing of the data that is not larger than a predetermined maximum number if the data is not of the predetermined type of data.
